Europäisches Patentamt

European Patent Office

Office européen des brevets

(19)

(11) **EP 1 158 511 A2**

(12) **EUROPEAN PATENT APPLICATION**

(43) Date of publication:
**28.11.2001 Bulletin 2001/48**

(51) Int Cl.[7]: **G11B 19/04**

(21) Application number: **01109884.5**

(22) Date of filing: **23.04.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **19.05.2000 US 574980** | (71) Applicant: **MITSUBISHI DENKI KABUSHIKI<br>KAISHA<br>Tokyo 100-8310 (JP)**<br><br>(72) Inventor: **Leigh, Darren L.<br>Belmont, Massachusetts 02478-3168 (US)**<br><br>(74) Representative: **Pfenning, Meinig & Partner GbR<br>Mozartstrasse 17<br>80336 München (DE)** |

(54) **Portable device damage prediction and data backup**

(57)   A portable electronic device backs up data stored in memories of the portable electronic device in response to detecting a damaging event such as a free fall. In the case of a free fall event the sensor is a three-axis accelerometer. A microprocessor controls the operation of the device in response to detecting the damaging event. A wireless communication link, enabled by the microprocessor, transmits the data stored in the memories upon detection of the damaging event. The transmitted data can be stored on a persistent storage unit of a backup server capable of receiving the transmitted data. Essential data can be transmitted with a higher priority than non-essential data.

FIG. 1

## Description

## Field of the Invention

The present invention relates generally to predicting damage to portable electronic devices, and more particularly to making a backup of the data stored in the devices in anticipation of potential damage.

## Background of the Invention

Small handheld electronic devices, such as laptops, palmtops, personal digital assistants (PDA), wireless phones, or other type of portable battery powered electronic devices can be subjected to extreme shocks, for example, when the device is dropped during normal use. In some cases, severe damage may occur to the device.

A hard disk drive of a computer device is especially vulnerable to impact because the proper operation of the drive is dependent on the maintenance of a very small gap between the drive heads and the surface of the disk. In the event that the heads were to contact the disk upon a shock to the computer, the heads could be damaged, and perhaps even more serious, magnetic material containing data could be damaged. This phenomenon, known as a "head crash," can irretrievably destroy data.

Typical prior art methods of protection rely on reaction to the shock to the portable device after it occurs, see, for example, U.S. Pat. No. 5,235,472 and U. S. Pat. No. 4,862,298. These methods rely on parking the heads of the disk drive either on a data-free landing zone or unloading the heads from the disk surface, it being understood that in general the disk drive can tolerate greater shock with the heads parked than when the heads are in a loaded state.

A better approach would predict potential damage prior to impact. U.S. Pat. No. 5,227,929 describes a system which includes a three axis accelerometer and a dedicated microprocessor which interrupts operation of the processor so that the processor can execute a software program to communicate with the disk drive which in turn commands the heads of the disk drive to retract. This series of events takes a relatively long time, which in fact may be so long that the computer may be subject to impact prior to the heads being retracted.

U.S. Patent 6,046,877 describes a computer device that includes an acceleration sensing device to determine if the device is subject to substantially zero support force, i.e., the device is in a free fall with acceleration of 0G. That is, the accelerometer senses a 1G difference from the supported rest condition. A control microprocessor of a disk drive unit in the device determines that such acceleration lasts for longer than a certain minimum time. If these conditions are met, the control microprocessor provides a signal to remove the heads from the disk. Thus, the heads are in an unloaded state upon impact, and data on the disk is protected.

However, many small portable devices, such as palmtops and PDAs, only use solid state memories to store data. Here, data recovery after a damaging fall can still be costly and difficult. Even though there may be no actual data loss, the physical damage to the device could so extensive that the device is inoperable. In this case, it becomes necessary to remove the solid state memories from the broken device, and to install the memories in another device in order to fully recover essential data. The process is tedious, and may well exceed the cost of the device itself.

An even more serious short coming of prior art protection techniques is that they focus on minimizing damage to the media, and not the data. For example, if a portable device is dropped out of a car and run over, prior art protection techniques do not admit data recovery. Similarly, if a portable device is dropped overboard from a boat, these techniques cannot recover the data, even though there may not be any actual damage to the media or the data. All data are irretrievably lost.

Therefore, it is desired to provide a method and apparatus for predicting potential data loss in portable electronic devices, and for backing up the data in anticipation of the data loss.

## Summary of the Invention

The invention provides an apparatus for backing up data stored in memories of a portable electronic device in case of a damaging event such as free fall, or water and fire damage. A sensor detects a damaging event. The sensor can be a three-axis accelerometer, or a heat and water sensor. A microprocessor controls the operation of the device in response to detecting the damaging event. A wireless communication link is enabled by the microprocessor to transmit the data upon detection of the damaging event.

The memories of the portable device can be a hard disk drive or a solid state memory. As an advantage of the invention, data are protection even if the media is damaged or lost. After the data are transmitted, they are, of course, out of the device, and data loss is avoided. The transmitted data can be received by a backup server and stored in persistent storage for later retrieval.

## Brief Description of the Drawings

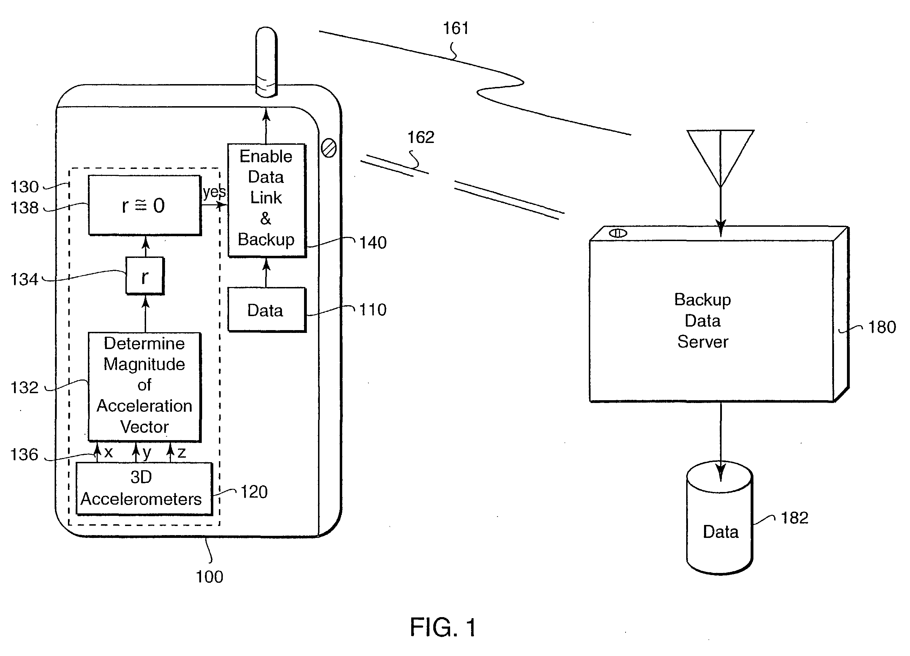

Figure 1 is a block diagram of a damage prediction and data backup system for a portable electronic device.

## Detailed Description of Preferred Embodiments

## System Architecture

Figure 1 shows a portable electronic device 100, such as a laptop, palmtop, PDA, wireless phone, or the like, according to the invention. The device 100 includes memories 110 storing data. The memories can include a hard disk drive and solid state memories. The invention provides sensors for detecting damaging events and means for predicting potential data loss. The device also includes means for backing up the data in anticipation of irreparable data loss or media damage.

In a preferred embodiment, the device includes a damaging event sensor 120, for example, a three-axis accelerometer 120. The device also includes a microprocessor 130, and a wireless communication link 140. In a preferred embodiment, the accelerometers are mounted near the center of gravity of the device 100. The accelerometer can be implemented using ADXL-202 devices from Analog Devices, Inc.

The microprocessor 130 can be conventional other than in the software programs executed by the microprocessor. Specifically, the software includes a procedure 132 for determining the magnitude $r$ 134 of the acceleration vector $(x,y,z)$ 136. Procedure 138 determines if the magnitude $r$ is substantially zero. That is, the device is in free fall. If the magnitude is zero, then the wireless communication link 140 is enabled to transmit the data stored in the memories. The transmission can use RF signals 161 or IR signals 162.

The transmitted data can be received by a backup server 180 connected to a persistent storage device 182 for later recovery.

**Operational Details**

If the device 100 is dropped from a height of about one meter, then it will experience approximately 450 milliseconds of free fall before it strikes the ground. This is adequate time for the device to detect the fall, enable the wireless communication link (161 or 162) and transmit the data before permanent damage occurs. The wireless communication link is designed such that a falling device requests and receives a higher-priority, lower-latency connection than would normally be used because the time before impact is limited.

During idle time, the device 100 identifies new or modified data since the last backup. The user can designate some of the data as essential, for example, todo lists, meeting notes, computational results, etc. Other data, e.g., phone numbers, birthdays, may be deemed non-essential because these are easily recovered or duplicated elsewhere. The essential data have a higher triage priority. Non-essential data that can be recovered or reconstructed from other sources have a lower triage priority.

The "free-fall" status of the portable device 100 is constantly monitored by the damage sensor and microprocessor 120. When the accelerometers indicate a "danger condition", an emergency backup of the high priority essential data begins. Relevant danger conditions include free-fall for greater than a predetermined amount of time, sensing of a shock, or hard acceleration beyond a given threshold. The time periods and thresholds are determined by balancing the costs of a false alarm, which would result in unneeded emergency data backup transmission, with those of a failed detection of a true damaging event, which could result in a total data loss.

When the emergency backup is triggered by the procedure 138, the device opens up a high-priority and low-latency wireless communication link with the backup server over a wireless data network. Since a "bad packet retry" protocol can increase the latency intolerably, forward error correction coding is used for the transmitted data so that minor errors in data transmission can be automatically corrected. Compression can also be used to send more data in a shorter period of time. The data can then be received by the backup server 180, higher priority essential data first, lower priority non-essential data later.

The amount of data that can be sent is a function of the amount of time between detection of a danger condition and damage to the device, and the data transmission speed. For falls, this is more or less the fall time. The fall time $t$ can be calculated with $t = \sqrt{2s/g}$, where s is the fall height, and $g$ is the acceleration of gravity (9.8 meters per second$^2$) at the surface of the earth.

For a one meter fall, the time to impact is a little over 400 milliseconds. For a two meter fall, the time is a little over 600 msec. With a 14.4 kbps data channel and a three to one data compression ratio, over 2 kilobytes of data can be transmitted over a typical wireless network during even a short fall. Better compression ratios, higher falls and faster data transmission speeds would increase this amount substantially.

The backup server 180 records the data that the device has transmitted. The server persistently stores the data until the user downloads a copy, or indicates to the server that the event was a false alarm.

It should be noted that the present invention could also be used to prevent data due to other damaging events. For example, a heat sensor can be included to protect against fire damage, humidity sensors can be used to protect against water damage. The advantage of the present invention is that it is focussed on data protection and not media protection as in the prior art. By detecting an impending damaging event, the effect of the invention is to provided reliable backup for essential data stored in portable devices - even if there is irreparable damage to the media, or the media is lost all together.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. An apparatus for backing up data stored in memories of a portable electronic device, comprising:

 a damaging event sensor;
 a microprocessor, coupled to the damaging event sensor, for controlling operation of the portable electronic device in response to detecting a damaging event;
 a wireless communications link enabled by the microprocessor upon detection of the damaging event for transmitting the data stored in the memories of the portable electronic device.

2. The apparatus of claim 1 wherein the memories include a disk drive.

3. The apparatus of claim 1 wherein the memories include a solid state memory.

4. The apparatus of claim 1 wherein the sensor includes a three-axis accelerometer and the damaging event is a free fall.

5. The apparatus of claim 4 wherein the microprocessor determines whether a magnitude of an acceleration vector is substantially zero.

6. The apparatus of claim 4 wherein the three-axis accelerometer is mounted near the center of gravity of the portable electronic device.

7. The apparatus of claim 1 wherein the sensor is a heat detector and the damaging event is a fire.

8. The apparatus of claim 1 wherein the sensor is a humidity detector and the damaging event is water immersion.

9. The apparatus of claim 1 wherein the wireless communication link uses a RF signal.

10. The apparatus of claim 1 wherein the wireless communication link uses an IR signal.

11. The apparatus of claim 1 further comprising:
 a backup server for receiving the transmitted data.

12. The apparatus of claim 11 wherein the backup server includes persistent storage for storing the received data.

13. The apparatus of claim 1 wherein the wireless communication link is high-priority and low-latency.

14. The apparatus of claim 1 wherein the data includes essential data and non-essential data, and wherein the essential data are transmitted before the non-essential data.

15. The apparatus of claim 1 wherein the data are transmitted with forward error correction coding.

16. The apparatus of claim 1 wherein the transmitted data are compressed.

17. A method for backing up data stored in memories of a portable electronic device, comprising:

 detecting a damaging event;
 controlling operation of the portable electronic device in response to detecting the damaging event;
 enabling a wireless communication link upon detecting the damaging event; and
 transmitting the data over the wireless communication link.

18. The method of claim 17 further comprising:
 measuring a magnitude of an acceleration vector to determine if the portable electronic device is experiencing a free fall.

19. The method of claim 17 further comprising:

 receiving the transmitted data in a server; and
 storing the received data in a persistent storage device.

20. The method of claim 17 further comprising:

 compressing the transmitted data; and
 coding the compressed data with forward error correction.

FIG. 1

EP 1 158 511 A2